# EUROPÄISCHE PATENTANMELDUNG

(11) **EP 2 658 095 A1**
(43) Veröffentlichungstag der Anmeldung: **30.10.2013**
(21) Anmeldenummer: 12165530.2
(22) Anmeldetag: 25.04.2012
(51) Int. Cl.: H02K 7/00, H02K 1/27

(54) **Elektrische Maschine mit geschlitzter Rotorwelle**

(71) Anmelder: Siemens Aktiengesellschaft, 80333 München (DE)
(72) Erfinder: Knorre, Björn, 06386 Micheln (DE); Storath, Albrecht, 97618 Niederlauer (DE)

(57) **Zusammenfassung**

Eine elektrische Maschine umfasst einen Stator (1) und einen Rotor (2). Der Rotor (2) weist eine um eine Rotationsachse (5) rotierbare Rotorwelle (3) auf. Auf der Rotorwelle (3) selbst oder auf einer auf der Rotorwelle (3) befestigten, aus einem massiven, magnetisch leitenden Material bestehenden Rotorhülse (10) ist eine Mehrzahl von mit dem Stator (1) elektromotorisch zusammenwirkenden Permanentmagneten (6) angeordnet. Zur Vermeidung von Wirbelströmen weist die Rotorwelle (3) oder die Rotorhülse (10) an ihrer dem Stator (1) zugewandten Außenfläche Schlitze (8) auf.

## Beschreibung

### Elektrische Maschine mit geschlitzter Rotorwelle

Die vorliegende Erfindung betrifft eine elektrische Maschine,
- wobei die elektrische Maschine einen Stator und einen Rotor umfasst,
- wobei der Rotor eine um eine Rotationsachse rotierbare Rotorwelle aufweist,
- wobei auf der Rotorwelle selbst oder auf einer auf der Rotorwelle befestigten, aus einem massiven, magnetisch leitenden Material bestehenden Rotorhülse eine Mehrzahl von mit dem Stator elektromotorisch zusammenwirkenden Permanentmagneten angeordnet ist.

Eine derartige elektrische Maschine ist beispielsweise aus der DE 102 40 580 A1 bekannt.

Aus der DE 103 58 693 A1 ist eine elektrische Maschine bekannt, die einen Stator und einen Rotor aufweist, wobei der Rotor geblecht ausgeführt ist und das Rotorblechpaket durch einen spiralförmig gewendelten Blechstreifen gebildet ist. Auf dem Rotorblech sind Permanentmagnete angeordnet.

Aus der DE 10 2008 020 779 A1 ist eine elektrische Maschine bekannt, bei welcher die Rotorwelle um die Rotorachse umlaufende Nuten aufweist. In den Nuten sind Abstandhalter angeordnet. Auf der Rotorwelle sind geblechte flussführende Elemente (d. h. der Rotor) angeordnet. In Taschen der flussführenden Elemente sind Permanentmagnete angeordnet.

Bei elektrischen Maschinen können aufgrund der Statorspeisung in der Rotorwelle Wirbelströme induziert werden. Die Wirbelströme sind - je nach Frequenz, Amplitude usw. - tolerierbar, lästig oder kritisch. Weiterhin können nachteilige thermische Effekte hervorgerufen werden, beispielsweise erhöhte Lagertemperaturen, erhöhte Rotortemperaturen und erhöhte Magnettemperaturen.

Zur Reduzierung der Temperaturen sind im Stand der Technik verschiedene Maßnahmen bekannt. So ist beispielsweise bekannt, relativ hochwertiges Elektroblech im Rotor einzusetzen, um aufgrund der guten Materialkennwerte niedrige Ummagnetisierungs- und Wirbelstromverluste zu erreichen. Weiterhin ist bekannt, die Pulsfrequenz eines den Stator speisenden Umrichters zu erhöhen und auch andere Parameter entsprechend einzustellen, so dass Stromoberschwingungen und damit Verluste möglichst reduziert werden. Höhere Pulsfrequenzen führen allerdings zu einem niedrigeren Wirkungsgrad auf Seiten des Umrichters, so dass bei gleicher Nennleistung dort leistungsstärkere Komponenten eingesetzt werden müssen. Dies wiederum erhöht die Kosten des Gesamtsystems. Weiterhin ist bekannt, zwischen Motor und Umrichter eine Drossel zur Reduzierung der Stromoberschwingungen einzusetzen. Schließlich ist noch bekannt, die elektrische Maschine mit reduzierter Leistung zu betreiben.

Die Aufgabe der vorliegenden Erfindung besteht darin, eine elektrische Maschine zu schaffen, die Wirbelströme auf möglichst einfache Weise zu reduzieren oder möglichst sogar ganz zu vermeiden.

Die Aufgabe wird durch eine elektrische Maschine mit den Merkmalen des Anspruchs 1 gelöst. Vorteilhafte Ausgestaltungen der elektrischen Maschine sind Gegenstand der abhängigen Ansprüche 2 bis 9.

Erfindungsgemäß ist vorgesehen, eine elektrische Maschine der eingangs genannten Art dadurch auszugestalten, dass die Rotorwelle oder die Rotorhülse zur Vermeidung von Wirbelströmen an ihrer dem Stator zugewandten Außenfläche Schlitze aufweist.

Es ist möglich, dass die Schlitze axial verlaufen, also parallel zur Rotationsachse. In diesem Fall müssen jedoch relativ viele Schlitze vorhanden sein. Vorzugsweise ist daher vorgesehen, dass die Schlitze kreisförmig oder helixartig um die Rotationsachse umlaufen.

Es ist möglich, dass die Schlitze in zwei zueinander verschiedenen Richtungen verlaufen. In diesem Fall bilden sich relativ kleine Felder, wobei jedes Feld sich sowohl tangential (also um die Rotationsachse herum) als auch axial nur über einen Teil der Rotorwelle erstreckt. Der Begriff "Feld" ist hier im geometrischen Sinne gemeint, nicht im Sinne eines elektrischen oder magnetischen Feldes.

Vorzugsweise ist insbesondere vorgesehen, dass die Schlitze kreisförmig oder helixartig um die Rotationsachse umlaufen. Im erstgenannten Fall entstehen mehrere Ringe, die axial voneinander jeweils durch einen Schlitz getrennt sind. Im letztgenannten Fall bildet sich ein einziges Feld, das sich wendelartig um die Rotationsachse herum erstreckt.

Die vorliegende Erfindung zeigt ihre Vorteile insbesondere dann, wenn der Stator zur Speisung des Stators an einen Umrichter angeschlossen ist.

In der Regel ist die Rotorwelle vom Stator radial außen umgeben. Sie kann massiv ausgebildet sein. Alternativ kann die Rotorwelle als Hohlwelle ausgebildet sein.

Die Dimensionierung der Schlitze muss derart bestimmt sein, dass den Wirbelströmen entgegen gewirkt wird. Weitere Funktionen müssen die Schlitze nicht erfüllen. Es ist daher beispielsweise ausreichend, wenn die Schlitze eine Schlitzbreite aufweisen, die zwischen 0,3 und 3,0 mm liegt. Aus analogen Gründen sollten die Schlitze eine Schlitztiefe aufweisen, die mindestens bei 0,5 mm liegt. 5,0 mm sollten jedoch nicht überschritten werden. Entscheidend ist, dass die Rotorwelle hinreichend stabil bleibt. Der Schlitzabstand (also der Abstand von Schlitz zu Schlitz) kann insbesondere zwischen 1,0 mm und 20,0 mm liegen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Schnitt durch eine elektrische Maschine,
- FIG 2: eine mögliche Ausgestaltung einer Rotorwelle,
- FIG 3: eine weitere mögliche Ausgestaltung einer Rotorwelle und
- FIG 4: einen Schnitt durch eine weitere elektrische Maschine.

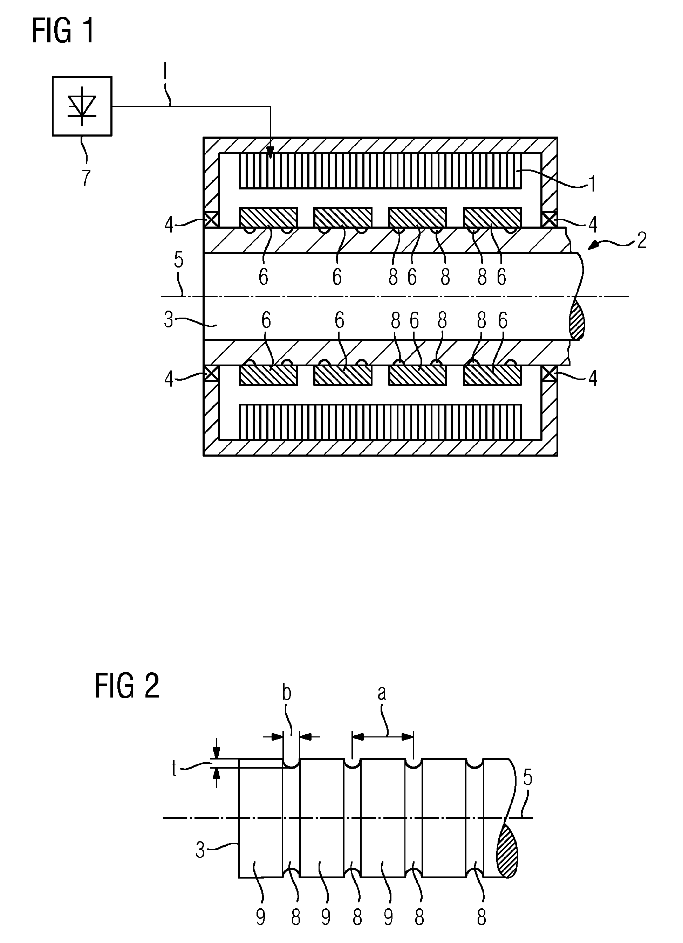

Gemäß FIG 1 weist eine elektrische Maschine einen Stator 1 und einen Rotor 2 auf. Der Rotor 2 weist eine Rotorwelle 3 auf. Die Rotorwelle 3 ist in Lagern 4 gelagert und um eine Rotationsachse 5 rotierbar. Auf der Rotorwelle 3 selbst - d. h. ohne zwischengeordnetes Rotorblechpaket - ist eine Mehrzahl von Permanentmagneten 6 angeordnet. Die Permanentmagnete 6 können insbesondere auf die Rotorwelle 3 aufgeklebt sein. Die Permanentmagnete 6 wirken mit dem Stator 1 elektromagnetisch zusammen. Zwischen den Permanentmagneten 6 und dem Stator 1 bildet sich also die elektromotorische Kraft (EMK) aus.

Der Stator 1 wird mit Strom I beaufschlagt. Beispielsweise kann der Stator 1 zu seiner Speisung an einen Umrichter 7 angeschlossen sein. Das Beaufschlagen des Stators 1 mit dem Strom I kann in der Rotorwelle 3 Wirbelströme hervorrufen. Die Wirbelströme sind relativ hochfrequent und fließen daher im Wesentlichen an der dem Stator 1 zugewandten Außenfläche der Rotorwelle 3. Um derartige Wirbelströme nach Möglichkeit zu vermeiden, weist die Rotorwelle 3 an ihrer dem Stator 1 zugewandten Seite eine Mehrzahl von Schlitzen 8 auf.

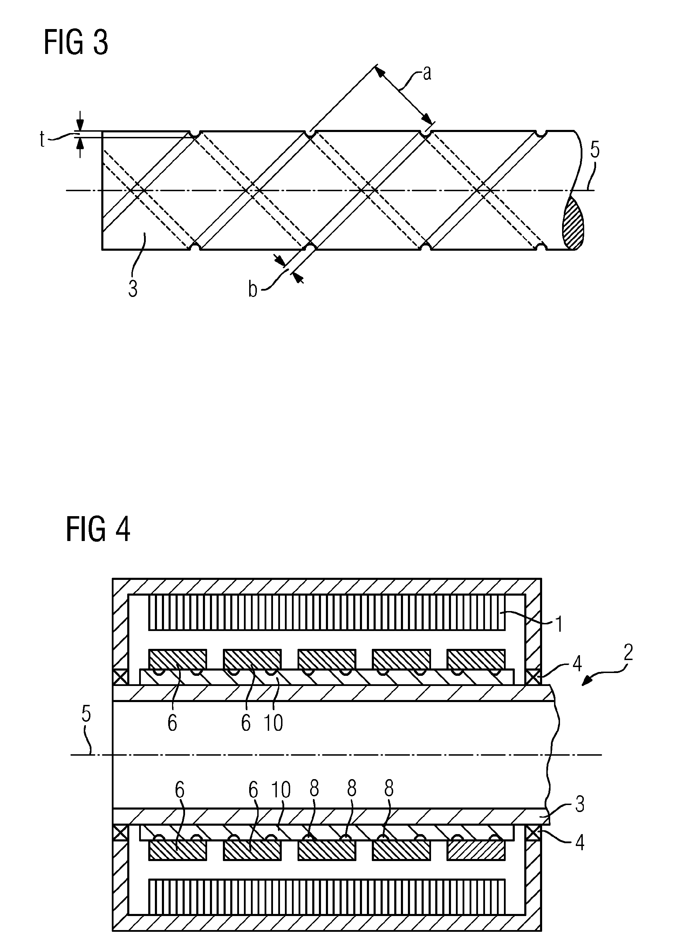

Es ist möglich, dass die Schlitze 8 parallel zur Rotationsachse 5 verlaufen. In diesem Fall ist die Anzahl an Schlitzen 8 relativ groß. Aus diesem Grund sind vorzugsweise zumindest einige der Schlitze 8 als um die Rotationsachse 5 umlaufende Schlitze 8 ausgebildet. Beispielsweise können die Schlitze 8 - siehe FIG 2 - kreisförmig um die Rotationsachse 5 umlaufen. In diesem Fall bilden Bereiche 9 zwischen benachbarten Schlitzen 8 jeweils einen Ring. Alternativ können die Schlitze 8 - siehe FIG 3 - beispielsweise helixartig um die Rotationsachse 5 umlaufen. Die Steigung der Schlitze 8 kann in diesem Fall nach Bedarf bestimmt sein.

In der Regel ist die Rotorwelle 3 entsprechend der Darstellung von FIG 1 vom Stator 1 radial außen umgeben. Sie kann als massive Welle ausgebildet sein. Alternativ kann sie entsprechend der Darstellung in FIG 1 als Hohlwelle ausgebildet sein.

Die Ausgestaltung der Schlitze 8 kann nach Bedarf gewählt sein. Dies gilt sowohl für eine Breite b der Schlitze 8 als auch für eine Tiefe t der Schlitze 8 als auch für einen Abstand a der Schlitze 8 (gerechnet von Schlitzmitte zu Schlitzmitte) voneinander. Beispielsweise kann die Schlitzbreite b bei (nur) 0,3 mm liegen. Sie kann jedoch auch größer sein. 3,0 mm sollten jedoch nicht überschritten werden. In analoger Weise sollte die Schlitztiefe t mindestens bei 0,5 mm liegen. 5,0 mm sollten in der Regel jedoch nicht überschritten werden. Der Schlitzabstand a kann so klein wie beispielsweise 1,0 mm sein. Er kann jedoch auch größer sein und bis zu 20,0 mm betragen. In Einzelfällen können jedoch sowohl für die Schlitzbreite b als auch für die Schlitztiefe t als auch für den Schlitzabstand a Werte außerhalb der genannten Grenzen sinnvoll sein.

Mittels der erfindungsgemäßen Ausgestaltung der Rotorwelle 3 können Wirbelströme auf einfache Weise deutlich reduziert werden.

FIG 4 zeigt eine gegenüber FIG 1 leicht modifizierte Ausgestaltung der elektrischen Maschine. Der wesentliche Unterschied zur Ausgestaltung von FIG 1 besteht darin, dass bei

FIG 4 auf der Rotorwelle 3 eine Rotorhülse 10 befestigt ist. Die Rotorhülse 10 besteht aus einem massiven Material, also nicht aus einzelnen Blechen. In der Regel ist die Rotorhülse 10 einstückig ausgebildet. Das Material, aus dem die Rotorhülse 10 besteht, ist magnetisch leitend, d.h. flussführend.

Bei der Ausgestaltung gemäß FIG 4 sind die Schlitze 8 nicht in die Rotorwelle 3, sondern in die Rotorhülse 10 eingebracht. Der Zweck, die Funktion und die Wirkung der Schlitze 8 bleiben gegenüber der Ausgestaltung von FIG 1 jedoch unverändert. Auch die möglichen Ausgestaltungen der Schlitze 8 - also deren Anzahl, Verlauf und Dimensionierung - bleiben gleich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

## Patentansprüche

1. Elektrische Maschine,
- wobei die elektrische Maschine einen Stator (1) und einen Rotor (2) umfasst,
- wobei der Rotor (2) eine um eine Rotationsachse (5) rotierbare Rotorwelle (3) aufweist,
- wobei auf der Rotorwelle (3) selbst oder auf einer auf der Rotorwelle (3) befestigten, aus einem massiven, magnetisch leitenden Material bestehenden Rotorhülse (10) eine Mehrzahl von mit dem Stator (1) elektromotorisch zusammenwirkenden Permanentmagneten (6) angeordnet ist,
- wobei die Rotorwelle (3) oder die Rotorhülse (10) zur Vermeidung von Wirbelströmen an ihrer dem Stator (1) zugewandten Außenfläche Schlitze (8) aufweist.

2. Elektrische Maschine nach Anspruch 1, **dadurch gekennzeichnet, dass** zumindest einige der Schlitze (8) als um die Rotationsachse (5) umlaufende Schlitze (8) ausgebildet sind.

3. Elektrische Maschine nach Anspruch 2, **dadurch gekennzeichnet, dass** die Schlitze (8) kreisförmig oder helixartig um die Rotationsachse (5) umlaufen.

4. Elektrische Maschine nach Anspruch 1, 2 oder 3, **dadurch gekennzeichnet, dass** der Stator (1) zur Speisung des Stators (1) an einen Umrichter (7) angeschlossen ist.

5. Elektrische Maschine nach einem der obigen Ansprüche,
**dadurch gekennzeichnet, dass** die Rotorwelle (3) vom Stator (1) radial außen umgeben ist.

6. Elektrische Maschine nach einem der obigen Ansprüche,
**dadurch gekennzeichnet, dass** die Schlitze (8) eine Schlitzbreite (b) aufweisen, die zwischen 0,1 mm und 3,0 mm liegt.

7. Elektrische Maschine nach einem der obigen Ansprüche,
**dadurch gekennzeichnet, dass** die Schlitze (8) eine Schlitztiefe (t) aufweisen, die mindestens bei 0,5 mm liegt.

8. Elektrische Maschine nach Anspruch 7, **dadurch gekennzeichnet, dass** die Schlitztiefe (t) maximal bei 5,0 mm liegt.

9. Elektrische Maschine nach einem der obigen Ansprüche,
**dadurch gekennzeichnet, dass** die Schlitze (8) einen Schlitzabstand (a) aufweisen, der zwischen 1,0 mm und 20,0 mm liegt.
